Europäisches Patentamt

European Patent Office

Office européen des brevets

(19)

(11) EP 0 777 060 A1

## (12) EUROPEAN PATENT APPLICATION
published in accordance with Art. 158(3) EPC

(43) Date of publication:
04.06.1997 Bulletin 1997/23

(21) Application number: 96900717.8

(22) Date of filing: 19.01.1996

(51) Int. Cl.$^6$: **F16D 41/30**

(86) International application number:
PCT/JP96/00084

(87) International publication number:
WO 96/26370 (29.08.1996 Gazette 1996/39)

(84) Designated Contracting States:
DE FR GB IT

(30) Priority: 24.02.1995 JP 59988/95

(71) Applicant: SHIMANO INC.
Osaka 590 (JP)

(72) Inventors:
• TABE, Koshi
Osaka 590 (JP)

• YAHATA, Yasuhiro
Osaka 590 (JP)

(74) Representative: Grosse, Wolfgang, Dipl.-Ing.
Patentanwälte
Herrmann-Trentepohl
Grosse - Bockhorni & Partner,
Forstenrieder Allee 59
81476 München (DE)

(54) **FREE WHEEL FOR BICYCLE**

(57) The bicycle freewheel having an ideal angle of play for sports bikes and high rigidity.

[The bicycle freewheel] composed of a ratchet mechanism (35) that is installed in-between a freewheel external body (33) and a hub body (6), which is coaxially installed on and rotatably supported by a hub axle (2), which is installed in a rear hub. The ratchet mechanism (35) communicates only unidirectional rotation from cogs mounted on the freewheel external body (33) to the hub body (6). The optimum range [for angle of play] is between 2 to 2.4° in the equation $360°/(N \times n) < 4.0°$, where N is the number of ratchet teeth (31) and n is the number of different-phase pawls (34).

FIG. 5

EP 0 777 060 A1

## Description

Technical Field

The present invention relates to a bicycle freewheel, and in particular, to a bicycle freewheel having a ratchet mechanism for a freewheel which is used primarily in competition bicycles such as road racing bikes, and general sports bikes; namely, a freewheel in which there is little play in the unidirectional clutch.

Prior Art

In the drive-wheel of a bicycle, normally the rear wheel, a freewheel is formed as an integral unit, or as a separate unit, relative to the hub shell on this rear wheel. The freewheel is equipped with a function that communicates rotational force only in one direction, or in other words, with a one-way clutch mechanism. A variety of designs for one-way clutch mechanisms are general knowledge, and among those that are known and in use are ratchet mechanisms employing notches (ratchets).

The functional number of pawls in a regular ratchet mechanism is one. In other words, one or a plurality of pawls in the ratchet wheel engage(s) in a common phase. In such cases, if the number of teeth on the ratchet wheel is small, then the angle of play in the one-way ratchet wheel tends to be greater. This kind of angle of play converts into slippage during the downstroke in pedaling. There is a generally known ratchet mechanism that reduces this effect in order to rapidly communicate the drive force of the legs, i.e., leg power, to the rear wheel by employing a plurality of pawls in different phases.

For example, in the case of multiple-cog freewheel cogs, if a force of 150 kgf is applied to the pedal, a force of 1,000 kgf or greater can be bearing down on these small pawls at certain times, granted that this figure is also dependent upon the length of the crankarm and the gear ratio. All cyclists frequently experience the necessity of negotiating an uphill turn by applying sudden acceleration in low gear in order to avoid losing balance. The need to apply sudden acceleration is emphasized particularly with competition cyclists who ride road racing bikes or mountain bikes (MTB/ATB) through varied terrain that combines steepness and roughness with tight turns. For such riding conditions, the ratchet mechanism needs the least possible angle of play between the pawl and the ratchet wheel, in addition to strength and impact resistance.

Clarification on the smallest tolerable angle of play is an issue that has not been pursued in the past. Theoretically, a zero (0) angle of play is considered to be ideal, but adjusting the angle of play to be as close to zero (0) as possible by increasing the number of teeth and pawls without limit is in fact impossible with present-day mechanisms. At the same time, hub shapes and sizes have been prescribed by standards. Also, in order to maintain compatibility with this hub, it is unrealistic to increase the shape and size of the freewheel cogs without limit. On the other hand, if the number of teeth and pawls is increased on a small-diameter freewheel, then the pawls and the ratchet wheels will suffer in the aforementioned strength and impact resistance properties, and other similar self-defeating consequences will result.

The number of teeth (T) on a ratchet wheel varies with its shape, but the usual freewheel generally has between 16 T and 20 T. For example, the ratchet wheel of the ratchet mechanism installed in a conventional mountain bike (MTB) patented by the present Applicant comprised 16 teeth which meshed with two in-phase pawls, and the angle of play was 22.5° (= 360°/16 T). Products having angles of play that are 8° and 11° patented by the present Applicant are also public knowledge.

In a bicycle equipped with a gear-shift device, the ideal angle of play in the freewheel varies with the gear ratio, and differs even among competition bikes based on whether they are professional or amateur level. This differs again between sports type and non-sports type bicycles. The present invention was developed in light of the prior art and achieves the object described below.

An object of the present invention is to offer a bicycle freewheel that possesses a generally universal requisite amount of angle of play.

Another object of the present invention is to offer a bicycle freewheel that possesses a competition-qualifying angle of play.

Yet another object of the present invention is to offer a bicycle freewheel that possesses an angle of play that qualifies for professional-level competition.

Yet another object of the present invention is to offer a bicycle freewheel as defined in the inventions of the aforementioned objects, wherein the freewheel has high rigidity.

Yet another object of the present invention is to offer a bicycle freewheel equipped with a ratchet mechanism having an angle of play not greater than 4°, and preferably not greater than 2.4°.

Summary of the Invention

The present invention employs the means below in order to achieve the objects of the present invention as described above.

The bicycle freewheel of the present invention 1, comprising

a hub axle (2) provided to a rear wheel hub;
a hub body (6) coaxially and rotatably provided to the aforementioned hub axle; and
a ratchet mechanism (35) that drives the aforementioned hub body (6) only in one direction, and said ratchet mechanism comprising
ratchet teeth (31) provided to the aforementioned hub body (6);

a freewheel external body (33) coaxially provided to the aforementioned hub axle (2) in such manner as to be rotatable relative to the aforementioned hub body (6);

a plurality of different-phase pawls (34) that are installed in-between the aforementioned ratchet teeth (31) and the aforementioned freewheel external body (33), provided with virtually equal phase differences relative to each other, and which mesh with the aforementioned ratchet teeth (31); and

an actuation means (39) for actuating the aforementioned different-phase pawls (34) in the direction of engagement, and installed in-between the aforementioned ratchet teeth (31) and the aforementioned freewheel external body (33);

in addition, $360°/(N \times n) < 4.0°$, where N is the number of teeth in the aforementioned ratchet teeth (31) and n is the number of the aforementioned different-phase paws (34). The present invention 1 is suitable for use in competition type bicycles such as road racing bikes and mountain bikes (MTB).

The bicycle freewheel of the present invention 2 utilizes the equation above with the substitution of "4.0°" given on the right of the equation above with "2 to 2.4°." This invention 2 is a product which is applicable to competition bicycles, especially road racing, mountain bikes (MTB) and the like that are used by professional racers.

The bicycle freewheel of the present invention 3 utilizes the equation from invention 2, where N = 36 and n = 5.

The bicycle freewheel of the present invention 4 utilizes the equation given in invention 2, where N = 31 and n = 5.

The bicycle freewheel of the present invention 5 is as defined in invention 1, comprising

bearings (41 and 42) wherein balls are installed in-between the aforementioned freewheel external body (33) and the aforementioned hub body (6) in two separate locations in the axial direction, and a ratchet mechanism (35) substantially positioned in-between these aforementioned two locations.

The bicycle freewheel of the present invention 6 is as defined in invention 1, comprising

bearings wherein balls are installed in-between the aforementioned freewheel external body (33) and the aforementioned hub body (6) in two separate locations in the axial direction, and an extension member (47) of the aforementioned freewheel external body (33) substantially positioned in-between these aforementioned two locations.

The bicycle freewheel of the present invention 7 is as defined in invention 1, wherein

a ratchet mechanism (35) is installed in the inner hole of the aforementioned freewheel external body (33).

The bicycle freewheel of the present invention 8 is as defined in invention 1, wherein

only one among a plurality of different-phase pawls (34) meshes with the aforementioned ratchet teeth (31).

The bicycle freewheel of the present invention 9 is as defined in invention 1, provided with

the aforementioned different-phase pawls (34) and the aforementioned actuation means (39) and comprising an inner body (50) positioned in-between the aforementioned hub axle (2) and the aforementioned freewheel external body (33); and

a cassette attachment bolt (60) for fastening the aforementioned inner body (50) coaxially with the aforementioned hub axle (2).

As a result of the bicycle freewheel of the present invention thus provided with an angle of play within the range of tolerable limits, an advantage gained is that immediate and forceful leg power is communicated from the pawl to the ratchet teeth within the time that the energy from the leg muscles substantially reaches a maximum level. Furthermore, other advantages are gained as a result of installing the bearings in an optimum position, such as high rigidity in the ratchet mechanism.

Brief Description of the Figures

Figure 1 is a front view of Practical Example 1 of the bicycle freewheel of the present invention.

Figure 2 is a side cross section of Figure 1.

Figure 3 is a front cross section of Practical Example 2 of the bicycle freewheel of the present invention.

Figure 4 is a front cross section of Practical Example 3 of the bicycle freewheel of the present invention.

Figure 5 is a front cross section of Practical Example 4 of the bicycle freewheel of the present invention.

Figure 6 is a cross section of Figure 5 along the VI - VI line.

Figures 7(a), 7(b), and 7(c) show the structure of the inner tube 50, where Fig. 7(a) is the cross-sectional view, Fig. 7(b) the right frontal view of Fig. 7(a), and Fig. 7(c) the left frontal view of Fig. 7(a).

Preferred Embodiments for Implementing the Invention

(Practical Example 1)

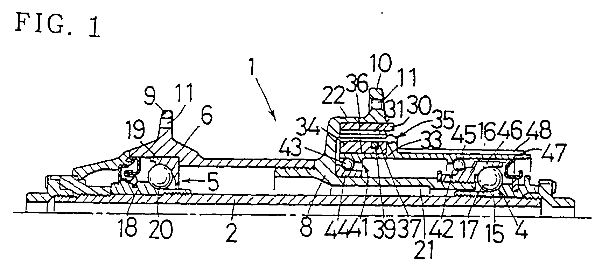

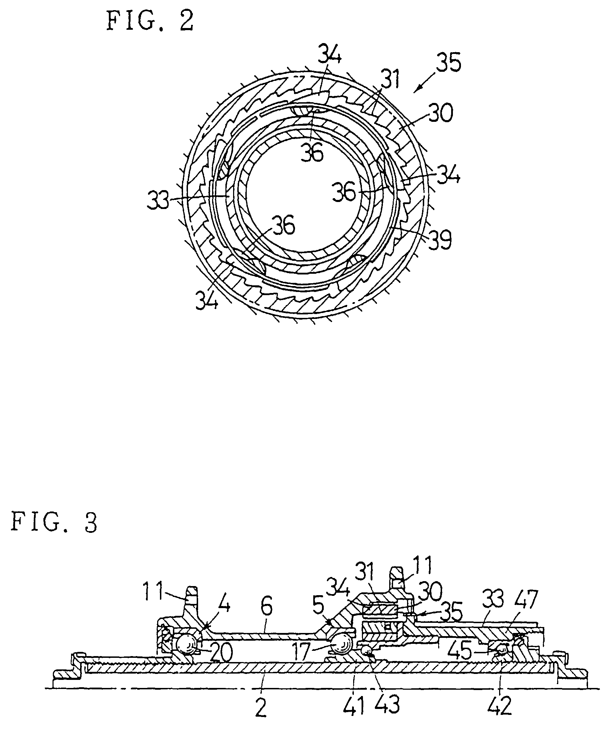

The present invention will be described next with reference to practical examples. Figures 1 and 2 show Practical Example 1 of this invention and are the frontal and the lateral cross-sectional views, respectively. Figure 1 shows the principle components of a rear hub 1, and shows only the side above the center line. The rear hub 1 is composed with a horizontally extending hub axle 2 as its center. A hub body 6 is rotatably supported relative to the hub axle 2 via left and right bearings 4 and 5. A left flange 9 and a right flange 10 have been provided to the hub body 6. Spoke insertion holes 11 have been made to the left and right for inserting the curved ends of spokes (not illustrated) that extend radially relative to the hub axle 2, and are located on the left and right flanges 9 and 10 [respectively].

The bearing 4 is composed of an inner ring 15 and an outer ring 16, and a plurality of balls 17 that are installed in-between this inner ring 15 and this outer ring 16. The inner ring 15 is screwed and attached to the outer periphery of the right side of the hub axle 2. The outer ring 16 has been screwed and attached to an extension member 21 which is a ring-shaped member on the inside of a right hub body 8. The bearing 5 is composed of inner and outer rings 18 and 19, and a plurality of balls 20 that have been installed in-between this inner ring 18 and the outer ring 19. The outer ring 19 is screwed and attached to the inner peripheral surface of the hub body 6.

A ratchet mechanism 35 is inserted and attached to the inside peripheral surface of an exterior ring shaped member 22 of the hub body 6 on the right side. The ratchet mechanism is composed of a ratchet-teeth main body 30 (referred to simply as "ratchet" or "ratchet main body" in this Specification) that is equipped with a plurality of ratchet teeth 31. The ratchet teeth 31 have a standard tooth shape, and their detailed description is omitted, but [the shape] is asymmetrical in the peripheral direction. Adjacent ratchet teeth 31 are arranged on the outer periphery at equal angles with their phases offset to the same degree. In the present example, there are 36 ratchet teeth 31.

A pawl wheel, or freewheel external body 33, which composes the ratchet mechanism, is rotatably supported relative to the extension member 21, or hub body 6, and is coaxial with the ratchet-teeth main body 30, or hub axle 2. A plurality of pawls 34 have been attached to the freewheel external body 33, where a pawl-fitting depression 36 has been formed in order to rotate the pawl 34 substantially in unison with the freewheel external body 33.

The plurality of pawl-adapted depressions 36 are offset from each other in their phases by the same degree. One pawl 34 is fitted into one pawl-fitting depression 36 such that the pawl can oscillate. An actuator groove 37 (Figure 1) having an indented shape has been provided to each pawl 34 in the direction of rotation, or peripheral direction. A double-ended coil spring 39 having a ring shape is inserted and attached to the actuator groove 37 that is formed in each pawl 34, and completes at least one rotation around the hub axle 2.

The utilization of this kind of double-ended coil spring 39 is general knowledge and common, therefore a detailed description is omitted. However, it is noted that use of this double-ended coil spring 39, enables the front tip of the oscillating end member [of a pawl] that is the most forward [pawl] in terms of the rotational direction of the pawls 34, each of which is able to swing up at its base, to be energized in the direction that engages said front tip with the ratchet teeth 31. A left-side second bearing 41 and a right-side second bearing 42 have been installed between the freewheel external body 33 and the extension member 21, each in different positions that are separated from each other to the left and to the right.

The second bearing 41 on the left side is composed of the freewheel external body 33, balls 43, and the inner ring 44, which is fitted into the exterior peripheral surface side of the extension member 21. The second bearing 42 on the right side comprises a part of the freewheel external body 33, balls 45, and the inner ring 46 which is fitted into the outer periphery side of the hub axle 21, specifically, the aforementioned outer ring 16 itself. The ratchet mechanism 35, which is composed of the aforementioned ratchet 30, the freewheel external body 33, and the pawl 34, is substantially installed in-between the two second bearings 41 and 42 on the outer peripheries of the two bearings 41 and 42.

A plurality of splines 48 are formed in the left and right direction, or in the axial direction, around the outer periphery of the extension member 47 of the freewheel external body 33. A multiple-cog freewheel (not illustrated) equipped with a plurality of "snap in" type sprockets (not illustrated) is coaxially fitted into the splines 48. A plurality of chainrings in the crankset rotate in unison with left and right crankarms, and rotate more or less synchronously as a consequence of being connected to a plurality of chainrings and a chain.

The operation in Practical Example 1 of the present invention will be explained next. Torque is generated in the left and right crankarms as a result of leg power from the cyclist. This torque is communicated from the chainrings to special sprockets on the multiple-cog freewheel via a chain. As a consequence of the torque that is communicated in this way, a rotational drive is generated in the freewheel external body 33, which rotates in unison with the chainring via the splines 48.

The plurality of pawls 34, which rotate in unison with the freewheel external body 33, which in turn rotates relative to the hub body 6 as a result of this kind of rotational drive, rotate in the direction for engaging the ratchet teeth 31 of the ratchet-teeth main body 30. That pawl 34 among the plurality of pawls 34 that is the most advanced in phase meshes and engages with one ratchet wheel tooth 31 relative to the plurality of in-phase teeth 31. As a result of this engagement, the ratchet-teeth main body 30 is acted upon by the rotational driving force, and the hub body 6 is acted upon by the rotational driving force via the ratchet wheel 30.

A situation where the bike speed has been dropped down shall be considered, for example when the gear shifter is in "low" and the speed of the bicycle has dropped almost to the point of falling over. Generally, the work achieved by the muscles of an animal relative to its external environment is one of discharging energy as a result of the ATP cycle. The amount of work achieved by the muscles, due to the discharge of such energy and the activity of muscular contraction, in fact, reaches its maximum value in humans a few seconds after a decision has been made by the brain of the person. In other words, the time, or time range, for the amount of work to reach its effective maximum value lags a few seconds behind the [moment of] mental decision.

This time shall be denoted by t. If 0° denotes a vertical line that passes through the center of rotation in a straight line direction to the downstroke of pedaling , then the vertical acceleration of the pedal in the vicinity of a 90° angle of position will differ in maximum value depending upon the person. Here, (this acceleration is considered to be) the normal maximum acceleration rate of a person and can be computed from the continuous pedal time t and the acceleration rate based on the leg power of an average person (the maximum acceleration rate within a range not requiring strenuous effort).

The time t used in this context is the time required to accelerate a "free" leg in which torque has not been generated. As a rule of thumb, this time is sufficiently long. The rotational diameter, which is the length between the left and right pedals, is usually 33 to 36 cm, however there are smaller and larger diameters than these. Therefore, the usual circumference is approximately 100 cm or greater.

The effective direction for pedaling action is the vertical direction, and consequently, this force is received effectively over only a part of the aforementioned approximately 100 cm. In order to use this force as the rotational torque of the pedal for maximum effectiveness, the position of the pedal falls within a range of angles close to being horizontal, and ideally, torque in the leg is also at maximum when the pedal is in this horizontal position. In the past, for example, the angle of play in the ratchet wheel was 22.5° with a ratchet wheel of 16 T, which was considered to be the minimum.

If the gear ratio between the sprockets of the front chainrings and the freewheel cogs is about 3 to 1, then the angle of play in the pedal has a maximum value of approximately 7.5° on a 16-tooth ratchet wheel. Under such circumstances, the play stroke is approximately 2 cm. This play of 2 cm is a large value not just for professional cyclists, but for general cyclists as well.

Conversely, when using the rear sprockets for reducing the rotational speed of the front chainrings, the aforementioned play stroke is further increased. Particularly in the case of competitive cycling, such as road races, when the torque in the leg needs to bear down on a horizontally positioned pedal in a "pulsing" fashion, i.e., explosively, then the torque in the leg cannot be communicated effectively to the pedal if the aforementioned play stroke is too large, thus presenting a problem.

Therefore, it is desirable that such play stroke be eliminated. In reality, it is improbable that play can be entirely eliminated, but it would be sufficient if play were controlled substantially or kept to a degree that is unnoticeable to a cyclist. The present invention is a product that substantially eliminates this angle of play by reducing it to approximately 1/10th or less. Prior to perfecting the present invention, it was determined from a test conducted in advance that the tolerable angle of play in the one-way clutch that would be acceptable to professional cyclists was a preferable 2 to 2.4° or less, and at most 4.0° or less, in the rear freewheel cog, granted there are individual differences.

This value was obtained based on the experience of professional cyclists and is not meant to serve as a hard and fast theoretical guide. However, it can be explained briefly on the basis of the aforementioned principles. This angle can be understood in a comparison based on the distance of play in the pedal with the aforementioned calculation example where 2 mm or less is approximately 1/10th of the aforementioned 2 cm angle of play, which is essentially equivalent to an absence of play.

The following conditions were thus arrived at and are expressed with the equation below.

The angle of play in Practical Example 1, which uses 36 T for N and 5 for n, where N is the number of teeth in the aforementioned ratchet wheel and n is the number of aforementioned different-phase pawls mounted, is

$$360°/(N \times n) = 2.0°$$

The ratchet mechanism 35 in Practical Example 1 of the present invention is composed of a ratchet-teeth main body 30 where the number of teeth is 36, and pawls 34 where the number of pawls is 5. If these [numbers] are substituted into the left side of the aforementioned equation, then it will equal approximately 2°. Retained in-between the left and right bearings 41 and 42 of this Practical Example 1 is a ratchet mechanism 35, thus imparting bearing rigidity against the torsion between the extension members 21 and 47 that results from the meshing of the ratchet wheel.

(Practical Example 2)

Figure 3 is a cross section of Practical Example 2. Practical Example 2 differs from Practical Example 1 in regards to bearings 4 and 5. Bearing 4, of the two bearings 4 and 5 in the aforementioned Practical Example 1, is installed further to the right side (as shown) than the ratchet mechanism 35, and therefore the ratchet mechanism 35 is positioned in-between the left and right bearings 4 and 5. However, the bearings 4 and 5 in Practical Example 2 support the two ends of the hub body 6 at short intervals. Therefore, a ratchet mechanism 35 is not installed in-between the bearings 4 and 5. Practical Example 2 is substantially identical in design to Practical Example 1 with regard to the left-side second bearing 41 and the right-side second bearing 42.

As a result, the mounting of a ratchet mechanism 35 in-between the left-side second bearing 41 and the right-side second bearing 42 is a common feature to Practical Examples 1 and 2. However there is a small difference in that the left-side second bearing 41 and the right-side second bearing 42 in Practical Example 2 are installed directly on the hub axle 2, whereas the left-side second bearing 41 and the right-side second bearing 42 in Practical Example 1 are installed indirectly on the hub axle 2 by way of bearings 4 and 5.

As a result of the design in Practical Example 2, despite the weight of a cyclist bearing down directly in the radial direction via the spoke insertion holes 11, this is not much of a problem because the hub body 6 has exceptional rigidity. Moreover, the rigidity of the ratchet mechanism 35 is also exceptional.

(Practical Example 3)

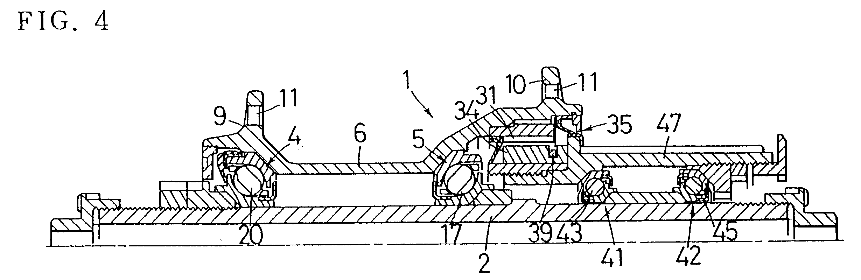

Figure 4 is a cross section of Practical Example 3. Practical Example 3 is similar to Practical Example 2 in regards to the mounting of bearings 4 and 5, but differs from Practical Examples 1 and 2 by the absence of a ratchet mechanism 35 inbetween the left-side second bearing 41 and the right-side second bearing 42. [Practical Example 3] is similar to Practical Example 2 in the aspect of the left-side second bearing 41 and the right-side second bearing 42 being installed directly on the hub axle 2. Practical Example 3 differs from Practical Examples 1 and 2 in that an extension member 47 of the freewheel external body 33 is installed in-between the left-side second bearing 41 and the right-side second bearing 42.

As a result of the design in Practical Example 3, despite the weight of a cyclist bearing down directly in the radial direction via the spoke insertion holes 11, few problems are presented because the hub body 6 has exceptional rigidity. Moreover, the rigidity of the extension member 47 of the freewheel external body 33 that supports the multiple-cog freewheel cogs (not illustrated) is also exceptional.

(Practical Example 4)

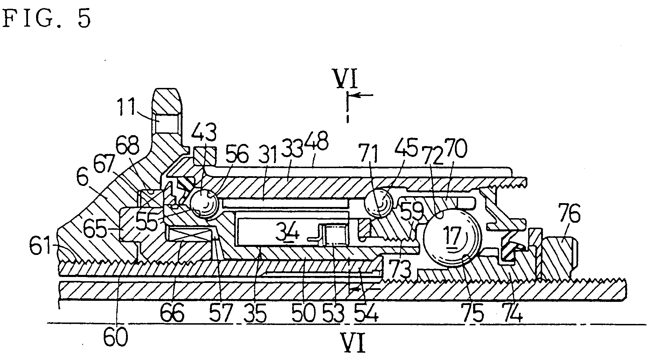

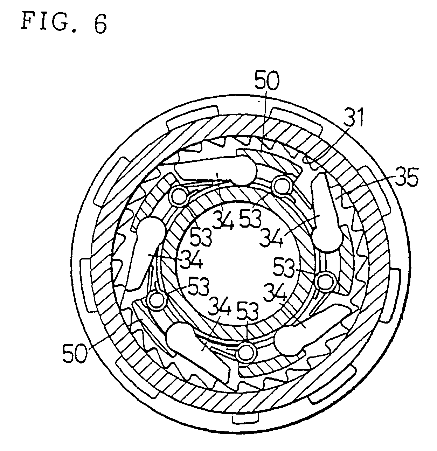

Figures 5, 6, and 7 are cross sections of Practical Example 4. The aforementioned Practical Examples 1, 2, and 3 are provided with a ratchet mechanism 35 installed on the outer periphery of the freewheel external body 33, but Practical Example 4 is different in that [said ratchet mechanism] is installed in the inner circle of the freewheel external body 33. As can be seen from the shape of the hub body 6 in the aforementioned Practical Examples 1, 2, and 3, the diameter of one end is larger in order to house the ratchet mechanism 35, and this configuration is not available in a general purpose product.

A general-use hub body can be used for the hub body 6 used in Practical Example 4, and a hub body 6 having a special configuration does not need to be prepared. Consequently, a merit of the product in Practical Example 4 is that only the freewheel cogs need to be replaced if they are damaged, etc., which means greater cost savings with the products in aforementioned Practical Examples 1, 2, and 3. This design shall be explained below. The freewheel external body 33 has a shape which is roughly cylindrical. Splines 48 have been formed on the outer surface of the freewheel external body 33. Multiple-cog freewheel cogs (not illustrated) have been inserted and fastened to the splines 48.

Ratchet teeth 31, which compose a ratchet mechanism 35, have been formed in the inner hole of the freewheel external body 33. There are 31 of the ratchet teeth 31 of the present practical Example. The diameter of the splines 48 is identical to that of a standardized product, and therefore, it is essentially impossible to further increase the number of teeth. If the number of teeth is increased any further, then tooth strength will be reduced and the teeth will not stand up to practical use.

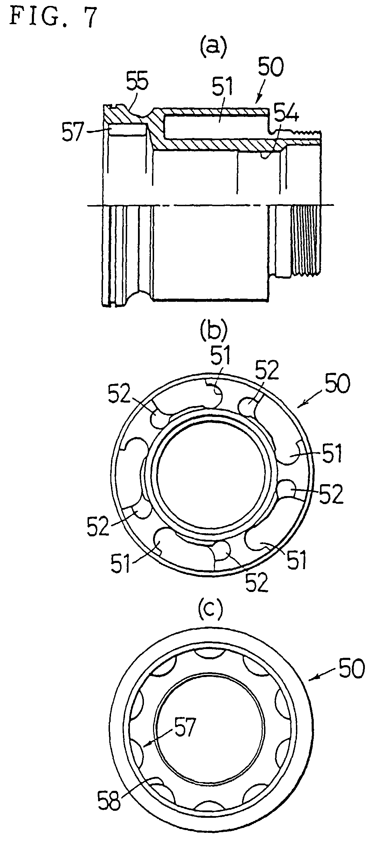

A cylindrical inner tube 50 has been coaxially inserted and installed in the inner hole of the freewheel external body 33. The purpose of the inner tube 50 is to retain the pawls 34. Figures 7(a), 7(b), and 7(c) show the configuration of the inner tube 50, where Figure 7(a) is a cross section, Figure 7(b) is a right side view of Figure 7(a), and Figure 7(c) is a left side view of Figure 7(a).

Five pawl-support holes 51 have been provided at equal-angles positions around the outer periphery of the inner tube 50 such that the center axes of these pawl-support holes 51 are parallel to the center axes of the inner tube 50. The purpose of the pawl-support holes 51 is to oscillatingly support one end of a pawl 34, and part of the hole is a round hole having an angle of about 240°. The depth of the pawl-support holes 51, or the length of the pawl-support holes 51 in the axial direction, is about the same as the length of the pawl 34.

Spring-support holes 52 have been formed in a location opposite the pawl-support holes 51 such that said spring holes form pairs with the pawl-support holes 51. The center axes of the spring-support holes 52 are parallel with the center axes of the pawl-support holes 51 and the inner tube 50. Coil springs 53 have been inserted into and are supported by the spring-support holes 52. The coil springs 53 serve to energize the pawls 34 such that the distal end of said pawls meshes with the ratchet teeth 31.

One end of the coil spring 53 is a twisted coil spring and meshes with one end of the pawl 34, while the other end contacts the outer peripheral surface of the inner tube 50 and energizes the pawl 34. There is a support hole 54 in the center of the inner tube 50. The support hole 54 is a through hole for inserting a cassette-attachment bolt 60. A thread 61 is formed at the distal end of the cassette-attachment bolt 60, and the inner tube 50 is fastened to the hub body 6 by screwing the thread 61 into the hub body 6.

A ball race 55 has been formed around the outer periphery of one end of the inner tube 50 and has a semi-circular shape viewed cross-sectionally. A ball race 56 has also been formed on the peripheral surface of the inner hole of the freewheel external body 33. Balls 43 have been installed in-between the race 56 of the freewheel exterior body 33 and the race 55 of the inner tube 50, roll on these races 55 and 56, and rotatably support the freewheel external body 33 over the inner tube 50.

Female serrations 57 are formed on one end of the inner tube 50. The female serrations 57 are divided into 10 equal parts whose cross-sectional shape comprises 10 semi-circular protuberances 58. The female serrations 57 serve to arrest the rotation of the inner tube 50. A serration main body 65 has been installed in-between the inner tube 50 and the hub body 6. The serration main body 65 serves to communicate the rotational torque generated by the freewheel cogs to the hub body 6 via the freewheel external body 33, the ratchet mechanism 35, and the inner tube 50.

Male serrations 66 are formed on the outer periphery of one end of the serration main body 65 and serve to mesh with the female serrations 57 of the inner tube 50. The male serrations 66 are shaped as depressions and protrusions which are inverted relative to those of the female serrations 66 [sic]. Male serrations 67 have been formed on the outer periphery of the other end of the serration main body 65. The male serrations 67 of the serration main body 65 mesh with female serrations 68 that have been formed on the hub body 6.

The shapes of these male serrations 67 and female serrations 68 are similar to those of the aforementioned male serrations 66 and female serrations 57. In effect, the rotational torque of the freewheel cogs is communicated through the freewheel external body 33, the ratchet mechanism 35, the inner tube 50, the female serrations 57 of the inner tube 50, the male serrations 67 of the serration main body 65, and the female serrations 68 of the hub body 6 to rotatably drive the hub body 6.

Thread 59 are formed on the outer periphery of the other end of the inner tube 50, and female threads 73 of a threaded lid 70 are screwed onto the threads 59 and attached to the inner tube 50. Consequently, the threaded lid 73 [sic] is integrally fixed to the inner tube 50. A race 71 is formed on the outer peripheral surface of the threaded lid 70, and a race 72 is formed on the inner peripheral surface of the inner hole. Balls 45 have been installed in-between the race 71 of the threaded lid 70 and the race formed on the inner peripheral surface of the inner hole of the freewheel external body 33.

The freewheel external body 33 and the inner tube 50 can rotate relative to each other. A cone 74 is screwed onto a thread member of the hub axle 2. Moreover, the cone 74 is fixed to the hub axle 2 by a locknut 76. A race 75 is formed on the outer peripheral surface of the cone 74. Balls 17 have been installed in-between a race 72 of the threaded lid 70 and the race 75 of the cone 74, and roll along the race 72 and the race 75.

Consequently, the inner tube 50, the hub body 6, and the cassette-attachment bolt 60 are rotatably supported over the hub axle 2.

The angle of play in Practical Example 4, which uses 31 T for N and 5 for n, where N is the number of teeth in the aforementioned ratchet wheel and n is the number of aforementioned different-phase pawls mounted, is

$$360°/(N \times n) = 2.32°$$

As can be seen from the description of the structure above, the freewheel external body 33, the inner tube 50, and the serration main body 65 can be integrally fixed to or removed from the hub body 6 by turning the cassette-attachment bolt 60 with the cone 74 and the balls 17 detached. For this reason, these parts can be replaced easily, which is advantageous.

(Other Practical Examples)

In the aforementioned Practical Example 1, the number of teeth in the ratchet teeth 31 was 36 T and the number of pawls 34 was 5; and in Practical Example 2, the number of teeth in the ratchet teeth 31 was 31 T and the number of pawls 34 was 5. However, [the present invention] is not to be limited by the aforementioned number of ratchet teeth 31 or pawls 34. If the number of pawls 34 is 6, then there should be 30 of ratchet teeth 31. If the number of pawls is 4, then there should be 45 teeth in order to obtain a value of 2° in the equation above, with the exception that in this case the angle of placement for the pawls 34 will not be the same as those in the Practical Examples 1 and 2 above.

However, in order to increase the number of teeth, it would be necessary, from a production technology standpoint, to increase the diameter of the ratchet-teeth main body 30. An increase in the diameter in this way would not be particularly desirable for competition use because there would also be an increase in weight. In this sense, the combination above of 36 T/5 pawls, or 31 T/5 pawls is recommended.

Regarding competition-level bikes for which the present invention is applicable, the present Applicant has the products listed below, and naturally, these are examples and not limitations.

The present invention is applicable for road racing type bikes having a 52- (or 53- or 55-) and a 39-tooth chainring combination, and a 12-, 13-, 14-, 15-, 16-, 17-, 19-, and 21-tooth freewheel cogs combination.

The present invention is applicable for mountain bikes having a 46-, 34-, and 24-tooth chainring combination, or a 48-, 38-, and 28-tooth chainring combination; and a 12-, 14-, 16-, 18-, 21-, 24-, 28-, and 38-tooth freewheel cogs combination.

Industrial Applicability

The bicycle freewheel of the present invention, as described above, can be used in bicycles such as sports bikes, road racing bikes, and mountain bikes, where the freewheel is incorporated as a single unit with the hub, or as a cassette, and communicates one-way rotational force only.

## Claims

1. The bicycle freewheel, comprising

   a hub axle (2) provided to a rear wheel hub;
   a hub body (6) coaxially and rotatably provided to the aforementioned hub axle; and
   a ratchet mechanism (35) that drives the aforementioned hub body (6) only in one direction and said ratchet mechanism comprising
   ratchet teeth (31) provided to the aforementioned hub body (6);
   a freewheel external body (33) coaxially provided to the aforementioned hub axle (2) in such manner as to be rotatable relative to the aforementioned hub body (6);
   a plurality of different-phase pawls (34) that are installed in-between the aforementioned ratchet teeth (31) and the aforementioned freewheel external body (33), provided with virtually equal phase different relative to each other and which mesh with the aforementioned ratchet teeth (31); and
   an actuation means (39) for actuating the aforementioned different-phase pawls (34) in the direction of engagement, and installed in-between the aforementioned ratchet teeth (31) and the aforementioned freewheel external body (33);
   in addition, $360°/(N \times n) < 4.0°$, where N is the number of teeth in the aforementioned ratchet teeth (31) and n is the number of the aforementioned different-phase pawls (34).

2. The bicycle freewheel as defined in Claim 1, that utilizes the equation above with "2 to 2.4°" to the right of this equation for application in competition bicycles.

3. The bicycle freewheel as defined in Claim 2, wherein N = 36 and n = 5.

4. The bicycle freewheel as defined in Claim 2, wherein N = 31 and n = 5.

5. The bicycle freewheel as defined in Claim 1, comprising

   bearings (41 and 42) wherein balls are installed in-between the aforementioned freewheel external body (33) and the aforementioned hub body (6) in two separate locations in the axial direction, and a ratchet mechanism (35) substantially positioned in-between these aforementioned two locations.

6. The bicycle freewheel 6 as defined in invention 1, comprising

   bearings wherein balls are installed in-between the aforementioned freewheel external body (33) and the aforementioned hub body (6) in two separate locations in the axial direction, and an extension member (47) of the aforementioned freewheel external body (33) substantially positioned in-between these aforementioned two locations.

7. The bicycle freewheel as defined in Claim 1, wherein

   a ratchet mechanism (35) is installed in the inner hole of the aforementioned freewheel external body (33).

8. The bicycle freewheel as defined in Claim 1, wherein

   only one among a plurality of different-phase pawls (34) meshes with the aforementioned ratchet teeth (31).

9. The bicycle freewheel as defined in Claim 1, comprising

   the aforementioned different-phase pawls (34) and the aforementioned actuation means (39); and comprising an inner body (50) positioned in-between the aforementioned hub axle (2) and the aforementioned freewheel external body (33); and
   a cassette attachment bolt (60) for fastening the aforementioned inner body (50) coaxially with the aforementioned hub axle (2).

## Amended Claims

1. The bicycle freewheel, comprising

   a hub axle (2) provided to a rear wheel hub;
   a hub body (6) coaxially and rotatably provided to the aforementioned hub axle; and
   a ratchet mechanism (35) that drives the aforementioned hub body (6) only in one direction, and said ratchet mechanism comprising
   ratchet teeth (31) provided to the aforementioned hub body (6) <u>or the freewheel external body (33) below</u>;
   a freewheel external body (33) coaxially provided to the aforementioned hub axle (2) in such manner as to be rotatable relative to the aforementioned hub body (6);
   a plurality of different-phase pawls (34) that are installed in-between the aforementioned ratchet teeth (31) and the aforementioned freewheel external body (33), provided with virtually equal different-phase relative to each other and which mesh with the aforementioned ratchet teeth (31); and

an actuation means (39) for actuating the aforementioned different-phase pawls (34) in the direction of engagement, and installed in-between the aforementioned ratchet teeth (31) and the aforementioned freewheel external body (33);

in addition, $360°/(N \times n) < 4.0°$, where N is the number of teeth in the aforementioned ratchet teeth (31) and n is the number of the aforementioned different-phase pawls (34).

2. The bicycle freewheel as defined in Claim 1, that utilizes the equation above with "2 to 2.4°" to the right of this equation for application in competition bicycles.

3. The bicycle freewheel as defined in Claim 2, wherein N = 36 and n = 5.

4. The bicycle freewheel as defined in Claim 2, wherein N = 31 and n = 5.

5. The bicycle freewheel as defined in Claim 1, comprising

bearings (41 and 42) wherein balls are installed in-between the aforementioned freewheel external body (33) and the aforementioned hub body (6) in two separate locations in the axial direction, and a ratchet mechanism (35) substantially positioned in-between these aforementioned two locations.

6. The bicycle freewheel 6 as defined in invention 1, comprising

bearings wherein balls are installed in-between the aforementioned freewheel external body (33) and the aforementioned hub body (6) in two separate locations in the axial direction, and an extension member (47) of the aforementioned freewheel external body (33) substantially positioned in-between these aforementioned two locations.

7. The bicycle freewheel as defined in Claim 1, wherein

a ratchet mechanism (35) is installed in the inner hole of the aforementioned freewheel external body (33).

8. The bicycle freewheel as defined in Claim 1, wherein

only one among a plurality of different-phase pawls (34) meshes with the aforementioned ratchet teeth (31).

9. The bicycle freewheel as defined in Claim 1, provided with

the aforementioned different-phase pawls (34) and the aforementioned actuation means (39); and comprising an inner body (50) positioned in-between the aforementioned hub axle (2) and the aforementioned freewheel external body (33); and

a cassette attachment bolt (60) for fastening the aforementioned inner body (50) coaxially with the aforementioned hub axle (2).

**Statement under Art. 19.1 PCT**

Claim 1 clarified that the ratchet teeth (31) has been installed on the hub body (6) or the freewheel external body (33). The grounds for the present amendment is that according to the structure of Practical Example 4 which is shown in Figures 5, 6, and 7, as well as described under the Detailed Description, the ratchet teeth (31) have been formed in the inner hole of the freewheel external body 33.

JP, 12-12977 concerns a bicycle freewheel. This bicycle freewheel, is provided with a pawl 9 that is able to swing by its own weight around a fulcrum consisting of a protuberance member 8 formed on the outer periphery of an inner ring 3. The oscillation of the pawl 9 is not dependent on a spring and, therefore, a simple structure is quite adequate.

JP, 53-86754 concerns a bicycle unit hub. Engagement projections 61 have been formed on a fixed body 6 that is screwed into the inner ring 2 of a hub flange 13. The movement of the rotating part of the engagement projections 61 can be adjusted to an optimal level because bearing elements 5 are fastened together in a designated position.

JP, 62-153433 concerns a bicycle freewheel. A ratchet teeth member 131 has been formed on the side surface of a freewheel external body 11, which disperses the load of the ratchet mechanism in two directions, thus permitting localized friction to be reduced. Moreover, a single line arrangement for installing steel balls 30 is adequate.

JP, 57-190932 concerns a ratchet mechanism. A magnet 4 has been installed on a pawl 3 that meshes with a ratchet ring 1. The magnet 4 mounted on an axle 2, and the magnet 4 mounted on the pawl 3, repulse each other, which causes the distal end of the pawl 3 to always mesh with the ratchet teeth.

In contrast to the above, an object of the present invention is to offer a bicycle freewheel that has an ideal angle of play for a sports bike and high rigidity.

FIG. 1

FIG. 2

FIG. 3

FIG. 4

FIG. 5

## FIG. 6

FIG. 7

(a)

(b)

(c)

## INTERNATIONAL SEARCH REPORT

| International application No. |
|---|
| PCT/JP96/00084 |

### A. CLASSIFICATION OF SUBJECT MATTER

Int. Cl$^6$  F16D41/30

According to International Patent Classification (IPC) or to both national classification and IPC

### B. FIELDS SEARCHED

Minimum documentation searched (classification system followed by classification symbols)

Int. Cl$^6$  F16D41/30, 41/12, B62M9/00, 9/10, B60B27/04

Documentation searched other than minimum documentation to the extent that such documents are included in the fields searched

Jitsuyo Shinan Koho          1926 - 1996
Kokai Jitsuyo Shinan Koho    1971 - 1996

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP, 12-12977, Y (Seizaburo Muro), August 27, 1937 (27. 08. 37), Fig. 1 (Family: none) | 1 - 9 |
| Y | JP, 53-86754, U (Shimano Inc.), July 17, 1978 (17. 07. 78), Fig. 3 (Family: none) | 1 - 9 |
| Y | JP, 62-153433, U (Shisei O), Setpember 29, 1987 (29. 09. 87), Fig. 6 (Family: none) | 1 - 9 |
| A | JP, 57-190932, U (Toyo Kuki Seisakusho K.K.), December 3, 1982 (03. 12. 82), Fig. 3 (Family: none) | 1 - 9 |

☐ Further documents are listed in the continuation of Box C.      ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| April 2, 1996 (02. 04. 96) | April 16, 1996 (16. 04. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

16